# EUROPEAN PATENT APPLICATION

(11) **EP 4 137 402 A1**
(43) Date of publication of application: **22.02.2023**
(21) Application number: 20930734.7
(22) Date of filing: 14.04.2020
(51) Int. Cl.: B64C 27/08, B64C 39/02

(54) **MULTICOPTER**

(71) Applicant: KAWASAKI JUKOGYO KABUSHIKI KAISHA, Kobe-shi, Hyogo 650-8670 (JP)
(72) Inventor: HANAMITSU, Akira, Kobe-shi, Hyogo 650-8670 (JP)
(74) Representative: Betten & Resch
(86) International application number: PCT/JP2020/016419
(87) International publication number: WO 2021/210063

(57) **Abstract**

Provided is a multicopter having improved cooling performance. A multicopter includes :a support 10; rotors 20 supported by the support 10; an electrical equipment 40 configured to supply power for rotationally driving the rotors 20; a controller 45 configured to control a flight of an airframe by individually adjusting a rotor speed of each of the rotors 20; and a cooling unit 5 configured to cool the electrical equipment 40. The cooling unit 5 includes an electrical-equipment-radiator 90, a electrical-equipmentcirculating-refrigerant circulating through the electrical-equipment-radiator 90 and the electrical equipment 40, and a pump 78 configured to circulate the electrical-equipmentcirculating-refrigerant.

## Description

### TECHNICAL FIELD

The present invention relates to a multicopter.

### BACKGROUND ART

Patent Document 1 discloses a multicopter including rotors and a motor that rotationally drives each of the rotors. The multicopter includes a generator driven by an engine and a battery. In the multicopter disclosed in Patent Document 1, a cooling fan that generates an air flow for cooling toward the engine is provided in a coupling that connects the generator and the engine.

### PRIOR ART DOCUMENT

### PATENT DOCUMENT

Patent Document 1: US 2016/0311544 A

### SUMMARY OF THE INVENTION

### PROBLEMS TO BE SOLVED BY THE INVENTION

When the load capacity is to be increased in case using a multicopter for such as load transportation, a structure for further suppressing a temperature rise in an internal combustion engine, electrical equipments, and the like (hereinafter, a heat generator) mounted on the multicopter is desired.

An object of the present invention is to provide a multicopter with improved cooling performance.

### MEANS FOR SOLVING THE PROBLEMS

In order to solve the above problems, the present invention provides a multicopter including:
a support;
rotors supported by the support;
a heat generator including an electrical equipment, or an electrical equipment and an internal combustion engine, configured to supply power for rotationally driving the rotors;
a controller configured to control a flight of an airframe by individually adjusting a rotor speed of each of the rotors; and
a cooling unit configured to cool the heat generator, in which
the cooling unit includes:
   a heat exchanger,
   a circulating refrigerant circulating through the heat exchanger and the heat generator, and
   a pump configured to circulate the circulating refrigerant.

According to the present invention, the circulating refrigerant takes away heat from the heat generating portion of the heat generator. The refrigerant that has taken away heat is sent to the heat exchanger by a pump. The circulating refrigerant is cooled by heat exchange with the atmosphere in the heat exchanger. As described above, the circulating refrigerant is circulated between the heat exchanger and the heat generating portion of the heat generator, whereby the temperature rise in the heat generator is prevented. By using the refrigerant in this manner, it is possible to improve the cooling effect as compared with the case of cooling by blowing the airflow towards the heat generator.

In addition, for example, the heat exchanger may be positioned in a region through which an airflow generated by rotation of each of the rotors passes.

According to the present configuration, heat exchange with the outside air in the heat exchanger is performed by the airflow generated by the rotating rotor, and it is not necessary to provide a new fan for dissipating heat from the heat exchanger. As a result, the number of parts can be reduced, the weight of the multicopter can be reduced, and the space for disposing a new fan can be reduced as compared with a case where a new fan is provided. In addition, it is not necessary to newly install a cooling apparatus for cooling the fan itself associated with when a newly fan is installed, to newly install an intake and exhaust structure for the fan, and to newly install a power drive apparatus for electrically driving the fan or a power transmission mechanism for mechanically driving the fan. It should be noted that when a fan is mechanically driven by an engine using a power transmission mechanism such as a chain and a pulley, a structure becomes complicated and an energy loss is large.

### EFFECTS OF THE INVENTION

According to the present invention, it is possible to provide a multicopter with improved cooling performance.

### BRIEF DESCRIPTION OF THE DRAWINGS

Fig. 1 is a plan view showing an overall configuration of a multicopter according to an embodiment of the present invention.
Fig. 2 is a side view showing an overall configuration of a multicopter according to an embodiment of the present invention.
Fig. 3 is an electrical configuration diagram of a multicopter according to an embodiment of the present invention.
Fig. 4 is a configuration diagram showing a cooling structure of a multicopter according to an embodiment of the present invention.
Fig. 5 is a view of a rotor and the periphery thereof as viewed from a direction parallel to the rotation axis of the rotor.

### MODE FOR CARRYING OUT THE INVENTION

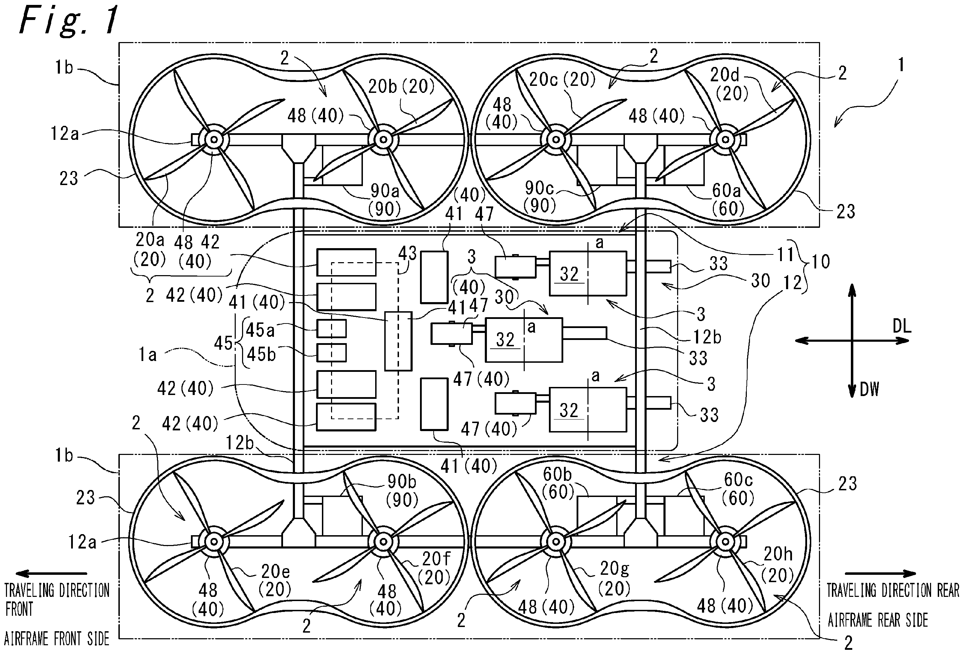

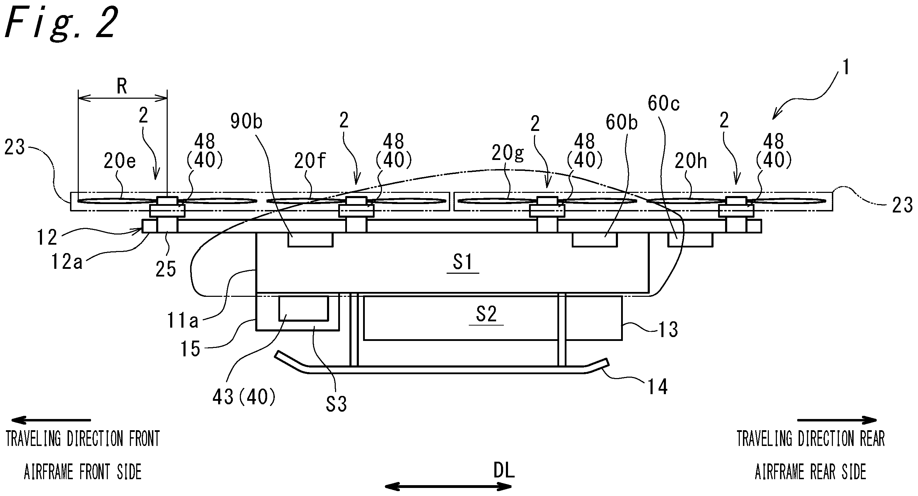

With reference to Fig. 1 and 2, an overall configuration of a multicopter 1 according to an embodiment of the present invention will be described.

The multicopter 1 in the present embodiment can perform attitude control by individually rotation-controlling rotors 20 by respective electric motors (motors) 48. The inclination and the rotation axis of the rotor 20 are maintained at predetermined fixed values.

In the multicopter 1 of the present embodiment, an engine 32 which is an internal combustion engine is used as a drive source of the rotor 20. The multicopter 1 converts the mechanical output output by the engine 32 into power by a generator 47. The multicopter 1 supplies the electric power generated in this manner to the motor 48 to rotate the rotor 20. The multicopter 1 of the present embodiment flies by driving rotors 20 by the power of the motors 48, and the engine 32 is used only for power generation. In other words, in the multicopter 1 of the present embodiment, the power of the engine 32 does not directly drive the rotors 20.

The multicopter 1 of the present embodiment includes rotors 20, a motor 48 individually provided for each of the rotors 20, engines 32, generators 47, a controller 45 for controlling each motor 48, and a support 10 for supporting these components.

The multicopter 1 of the present embodiment includes a rotor unit 2 unitized including the rotor 20, the motor 48, and an inverter 42, and a power generation unit 3 unitized including the engine 32, the generator 47, and a converter 41.

In the multicopter 1, a predetermined reference plane and an orthogonal direction orthogonal to the reference plane are set. The rotor blades of each rotor 20 extend substantially along the reference plane. In other words, the rotation axis of each rotor 20 extends substantially along the orthogonal direction.

As shown in Fig. 1, a case where a reference plane set to the multicopter 1 extends horizontally will be described as a reference attitude of the multicopter 1. Hereinafter, unless otherwise specified, description will be made based on the reference attitude. In the reference attitude, the rotor blades of each rotor 20 extend substantially along a horizontal plane. The rotation axis of each rotor 20 extends substantially along the vertical direction. Therefore, in the reference attitude, the multicopter 1 has lift generated in the vertical direction.

The respective rotors 20 are spaced apart from each other in the horizontal direction. Each rotor 20 is disposed at a position in a plan view, away from the position of the center of gravity of the multicopter 1 and surrounding the position of the center of gravity.

In the multicopter 1, in a plan view, a fuselage region 1a including the position of the center of gravity of the multicopter 1 and adjacent to the rotors 20, and a rotor-side region 1b positioned closer to the rotors 20 with respect to the fuselage region 1a are defined. In a plan view, the fuselage region 1a is a region inside a polygon connecting the rotation axes of the rotors 20. In the present embodiment, in a plan view, the fuselage region 1a is formed in an elongated shape. In a plan view, the long side direction of the fuselage region 1a may be referred to as an airframe front-rear direction DL, and the short side direction of the fuselage region 1a may be referred to as an airframe width direction DW. The airframe front-rear direction DL is a direction parallel to the direction in which the airframe travels. It should be noted that the airframe front-rear direction DL and the airframe width direction DW are named for easy understanding, and may be independent of the traveling direction and the airframe shape. In this case, the airframe front-rear direction DL is a first direction extending parallel to the reference plane, and the airframe width direction DW is a second direction extending parallel to the reference plane and orthogonal to the first direction. In the present embodiment, the rotors 20 are arranged on each side of the fuselage region 1a in the airframe width direction DW. Specifically, in the multicopter 1, four rotors 20a to 20d aligned in the airframe front-rear direction DL are arranged on one side of the fuselage region 1a in the airframe width direction DW. In addition, the other four rotors 20e to 20h aligned in the airframe front-rear direction DL are arranged on the other side of the fuselage region 1a in the airframe width direction DW.

The support 10 includes a body frame 11 disposed in the fuselage region 1a and a rotor support frame 12 disposed in the rotor-side region 1b. The body frame 11 supports many parts except the rotor 20. The body frame 11 constitutes a strength member of the multicopter 1 and includes at least a portion constituting a framework. The body frame 11 supports a fuselage apparatus disposed in the fuselage region 1a. In other words, the body frame 11 defines a fuselage apparatus loading space S1 (see Fig. 2) in which the fuselage apparatus is loaded. For example, the fuselage apparatus includes each power generation unit 3 described above and a power supply apparatus for supplying the power generated by the power generation unit 3 to each motor 48. In the present embodiment, the body frame 11 may be formed in a basket shape formed by pillars. In the present embodiment, a body housing 11a is fixed to the body frame 11, and a fuselage apparatus is disposed in an internal space of the body housing 11a.

The rotor support frame 12 is connected to the body frame 11, and has a portion protruding outward from the fuselage region 1a in a plan view. The rotor support frame 12 supports the motor 48 to which the rotor 20 is attached. The rotor support frame 12 transmits the lift generated by the rotation of each rotor 20 to the body frame 11. As a result, the entire multicopter 1 is configured to be able to fly together with the rotors 20. In the present embodiment, the rotor support frame 12 is formed in a ladder shape and includes a rotor support member 12a and a lateral frame 12b. A pair of the rotor support members 12a is disposed on both sides in the airframe width direction DW with respect to the body frame 11 and extends in the airframe front-rear direction DL. The pair of rotor support members 12a support respective two sets of four rotors 20a to 20d and 20e to 20h aligned in the airframe front-rear direction DL. The lateral frame 12b connects the pair of rotor support members 12a. Specifically, the lateral frame 12b extends in the airframe width direction DW to connect the pair of rotor support members 12a. The lateral frame 12b is connected to the body frame 11. In other words, each rotor support frame 12 is fixed to the body frame 11 through each lateral frame 12b. In the present embodiment, the fuselage apparatus loading space S1 is defined between the pair of lateral frames 12b in the airframe front-rear direction DL. In the present embodiment, the fuselage apparatus loading space S1 is arranged below the positions where the rotor blades of the rotors 20 are arranged.

In the present embodiment, the multicopter 1 includes a luggage room housing 13 that covers the luggage room S2 on which the load is loaded. The luggage room housing 13 is disposed in the fuselage region 1a and is supported by the body frame 11. In the flight state of the multicopter 1, the luggage room S2 is disposed at a position overlapping with the fuselage apparatus loading space S1 of the body frame 11 in the vertical direction as viewed in a plan view. Specifically, the luggage room S2 is disposed below the fuselage apparatus loading space S1. The luggage room S2 can protect the load from wind, rain, and the like by being covered by the luggage room housing 13. In addition, the luggage room S2 is formed with a wall for partitioning a space in the vertical direction between the luggage room S2 and the fuselage apparatus loading space S1. The luggage room S2 is positioned in a fuselage region 1a closer to the rear in the front-rear direction of the support 10.

In the present embodiment, the multicopter 1 includes an auxiliary room housing 15 that covers the auxiliary room S3 in which the auxiliary component is loaded, separately from the luggage room S2. The auxiliary room housing 15 is disposed in the fuselage region 1a and is supported by the body frame 11. In the flight state of the multicopter 1, the auxiliary room S3 is disposed at a position overlapping with the fuselage apparatus loading space S1 of the body frame 11 in the vertical direction in a plan view. Specifically, the auxiliary room S3 is disposed below the fuselage apparatus loading space S1. By forming the auxiliary room S3, a region where a component can be mounted can be expanded downward. The auxiliary room S3 can protect the auxiliary component from wind, rain, and the like by being covered by the auxiliary room housing 15. In addition, the auxiliary room S3 is formed with a wall for partitioning a space in the vertical direction between the auxiliary room S3 and the fuselage apparatus loading space S1. The auxiliary room S3 is disposed at a position shifted in the horizontal direction with respect to the luggage room S2. In the present embodiment, the auxiliary room S3 is positioned in a fuselage region 1a closer to the front in the airframe front-rear direction. In other words, the auxiliary room S3 is aligned in the front-rear direction with respect to the luggage room S2, and is disposed in front of the luggage room S2 in the airframe front-rear direction DL. In the present embodiment, a capacitor 43 described below is housed in the auxiliary room S3. As described above, since the capacitor 43 is disposed away from the generator 47 and the engine 32, the influence of heat from these components can be suppressed.

A landing gear 14 that comes into contact with the ground when the multicopter 1 is grounded is connected to the body frame 11. The landing gear 14 protrudes downward from the body frame 11. Since the landing gear 14 is formed, the multicopter 1 can stably stand by itself in a grounded state. In the present embodiment, the grounding portion of the landing gear 14 is formed to protrude more downwardly with respect to the fuselage apparatus loading space S1, the luggage room S2, and the auxiliary room S3. In other words, the fuselage apparatus loading space S1 and the luggage room S2 are disposed between the rotor blades of the rotors 20 and the grounding portion of the landing gear 14 in the vertical direction.

Each rotor 20 is disposed in the rotor-side region 1b. That is, each rotor 20 is positioned on each side in the airframe width direction DW of the body frame 11, and is disposed at a position not overlapping with the fuselage region 1a in a plan view. The rotors 20a to 20d are attached in alignment in the airframe front-rear direction DL to the rotor support member 12a on one side in the airframe width direction DW of the fuselage region 1a. The rotors 20e to 20h are attached in alignment in the airframe front-rear direction DL to the rotor support member 12a on the other side in the airframe width direction DW of the fuselage region 1a. In a plan view, the adjacent respective rotors 20 are arranged, at intervals, at positions shifted from each other in the airframe front-rear direction DL and the airframe width direction DW, that is, at positions not overlapping with each other.

Each rotor unit 2 includes a rotor 20 for providing thrust to the multicopter 1, a motor 48 as an electric motor that rotates a rotating shaft by being supplied with electric power, and an inverter 42 for applying drive power to the motor 48. Each rotor 20 is fixed to, for example, a rotor portion of the motor 48 with a bolt or the like. A stator portion of the motor 48 is fixed to the rotor support frame 12. This causes the motor 48 to rotate the rotor 20 around the rotation axis. Each motor 48 is fixed to the rotor support member 12a through the motor mounting member 25. In the present embodiment, each motor 48 is achieved by an AC motor. It should be noted that an inverter 42 constituting a part of each rotor unit 2 is disposed on the airframe front side in the fuselage region 1a.

As described above, the rotor unit 2 is provided with motors 48 corresponding to the respective rotors 20 and inverters 42 corresponding to the respective rotors. The controller 45 individually controls each of the motors 48 through a corresponding one of the inverters 42, whereby the rotor 20 can be individually rotation-controlled. As described above, the controller 45 can change the attitude angle by individually controlling each motor 48 to make the magnitude of the lift generated in each rotor 20 different. In this manner, the controller 45 can control the attitude during flight and the flight propulsion.

In the present embodiment, each rotor 20 is a fixed pitch type in which the pitch angle of the rotor blades is fixed. The multicopter 1 can be simplified in structure as compared with a case where the pitch angle is configured to be variable, and can achieve improvement in maintainability and weight reduction. In addition, by rotating the rotor 20 by the motor 48, the structure can be simplified as compared with a case of rotating the rotor 20 by the rotation of the engine 32, maintainability can be improved and weight can be reduced, and further, responsiveness until the rotor speed changes according to a control command by the controller 45 can be enhanced.

The multicopter 1 includes a rotor cover 23 that covers each rotor 20 from the radial outside of the rotating shaft. The rotor cover 23 can prevent an object from approaching a rotation region of the rotor 20. Furthermore, contact of an object with the rotor 20 can be prevented and the rotor 20 can also be protected. The rotor cover 23 is fixed to the rotor support member 12a. The rotor cover 23 is formed in a tubular shape opened in the vertical direction. In the present embodiment, in a plan view, the rotor cover 23 is formed in a substantially elongated hole shape that covers four sets of two rotors 20a and 20b, 20c and 20d, 20e and 20f, and 20g and 20h aligned in the airframe front-rear direction DL.

Each power generation unit 3 includes an internal combustion engine unit including an engine 32 as an internal combustion engine and a generator 47 driven by the engine 32. In addition, each power generation unit 3 includes a converter 41 which is a primary power conversion apparatus that converts the power generated by the generator 47. It should be noted that the generator 47 and the converter 41 are one of the electrical equipments 40 (what is called power electrical equipments) for supplying driving electric power for supplying electric power for rotationally driving the rotor 20, and all the electrical equipments 40 are disposed on the airframe front side in the fuselage region 1a.

In the present embodiment, the multicopter 1 flies mainly by a driving force generated by engine driving. Specifically, the engine 32 rotates an engine output shaft by combustion of fuel. The engine 32 has an output shaft thereof connected to an input shaft of a generator 47 so as to be capable of transmitting power. The generator 47 converts mechanical rotational force into electric power by the input shaft being rotated by the engine 32. By being electrically connected to the generator 47, the converter 41 adjusts AC power supplied from the generator 47 and supplies power to the inverter 42 which is a secondary power conversion apparatus described below. The inverter 42 converts the DC power converted by the converter 41 into AC power suitable for driving the motor 48 and applies the AC power to the motor 48.

In the present embodiment, the multicopter 1 includes three power generation units 3. When power is transmitted from the engine 32 to the generator 47, a speed reducer that reduces the revolving speed of the power is interposed. Each power generation unit 3 is formed in the same structure. This makes it possible to prevent an increase in the number of component types and improve maintainability.

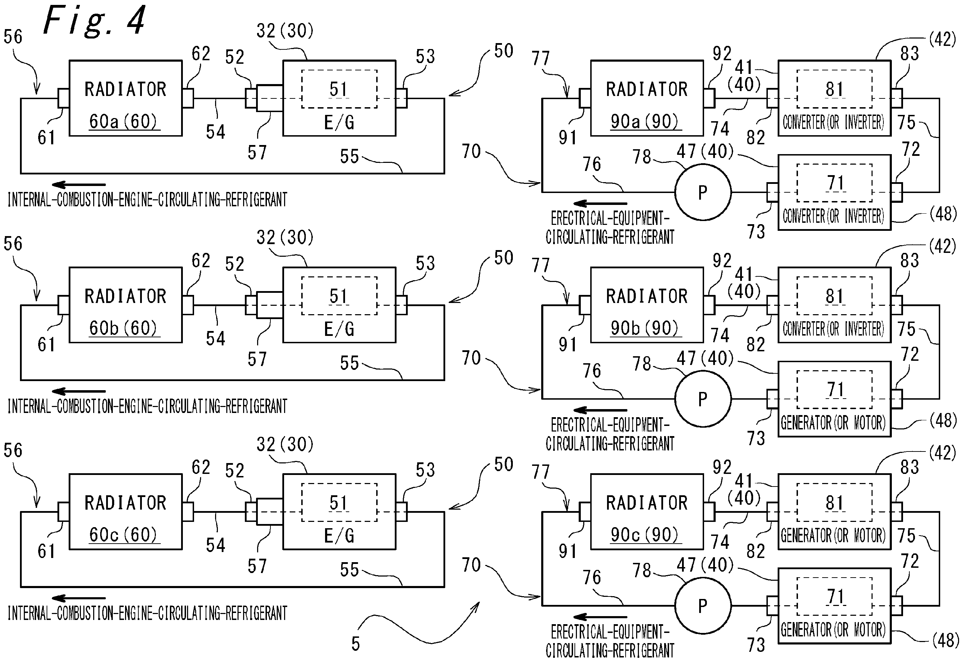

Next, with reference to Fig. 4, a cooling structure of the multicopter 1 will be described. The multicopter 1 includes a cooling unit 5 for cooling the power generation unit 3. The cooling unit 5 of the present embodiment includes a cooling system that draws heat from a heat generating portion provided in the multicopter 1 by the refrigerant, a heat dissipating portion that exchanges heat of the refrigerant that takes away heat with the atmosphere to dissipate heat, a refrigerant circulation passage that circulates the cooling medium over the cooling system and the heat dissipating portion, and a pump for circulating the refrigerant in the circulation passage.

The cooling unit 5 includes, among the power generation units 3, an internal-combustion-engine-cooling-system 50 that cools the internal combustion engine units 30 and an electrical-equipment-cooling-system 70 that cools the electrical equipments 40. The internal-combustion-engine-cooling-system 50 is individually provided for each internal combustion engine unit 30. In the present embodiment, since one internal combustion engine unit 30 is provided for each of the three power generation units 3, three internal-combustion-engine-cooling-systems 50 are provided. The electrical-equipment-cooling-system 70 is individually provided for each power generating system electrical equipment 40 including the generator 47 and the converter 41. In the present embodiment, since one power generating system electrical equipment 40 is provided for each of the three power generation units 3, three electrical-equipment-cooling-systems 70 are provided.

The internal-combustion-engine-cooling-system 50 includes an engine-radiator (internal combustion engine heat exchanger) 60 constituting a heat dissipation portion. The electrical-equipment-cooling-system 70 includes an electrical-equipment-radiator 90 constituting a heat dissipation portion. Each of the radiators 60 and 90 is a heat exchanger, and dissipates heat of the refrigerant and lowers the temperature of the refrigerant by causing heat exchange between the built-in refrigerant and the surrounding atmosphere. The heat dissipation performance of the engine-radiator 60 is configured to be higher than the heat dissipation performance of the electrical-equipment-radiator 90.

Each of the radiators 60 and 90 is individually provided every three internal-combustion-engine-cooling-systems 50 and three electrical-equipment-cooling-systems 70. In the present embodiment, three engine-radiators 60a to 60c corresponding to the three respective internal-combustion-engine-cooling-systems 50, and three electrical-equipment-radiators 90a to 90c corresponding to the three respective electrical-equipment-cooling-systems 70, are provided.

In the internal-combustion-engine-cooling-system 50, an engine cooling system 51 that takes away heat of a heat generating portion of the engine 32 by the refrigerant is formed. The engine cooling system 51 is formed adjacent to a heat generating portion of the engine 32. The internal-combustion-engine-cooling-system 50 cools the engine cooling system 51 so as to suppress a temperature rise caused by driving of the engine 32.

The engine 32 is formed with an engine inlet 52 for introducing a circulating refrigerant (internal-combustion-engine-circulating-refrigerant) cooled by each engine-radiator 60 into the engine cooling system 51, and an engine outlet 53 for discharging the circulating refrigerant that has taken away heat from a heat generating portion of the engine 32. The engine-radiator 60 is formed with a radiator inlet 61 for introducing a circulating refrigerant that has taken away heat of the engine 32, and a radiator outlet 62 for discharging the circulating refrigerant cooled by the engine-radiator 60.

The internal-combustion-engine-cooling-system 50 includes an engine inlet pipe 54 that connects the radiator outlet 62 and the engine inlet 52, and an engine outlet pipe 55 that connects the engine outlet 53 and the radiator inlet 61. The engine-radiator 60, the engine 32, and the pipes 54 and 55 constitute an engine circulation path 56 through which the internal-combustion-engine-circulating-refrigerant circulates. In addition, the internal-combustion-engine-cooling-system 50 is provided with a pump 57 for circulating the circulating refrigerant in the engine circulation path 56. In the present embodiment, as the pump 57, a mechanically-driven pump driven by receiving a part of the rotational power of the engine 32 may be used.

In the present embodiment, the engine-radiator 60 is positioned in the rotor-side region 1b, and is provided at a position sufficiently away from the fuselage region 1a where the engine 32 (pump 57) is provided.

In the electrical-equipment-cooling-system 70, a generator cooling system 71 and a converter cooling system 81 that take away heat of the generator 47 and a heat generating portion of the corresponding converter 41 by the refrigerant are formed. The generator cooling system 71 is formed adjacent to the heat generating portion of the generator 47. In addition, the converter cooling system 81 is formed around the corresponding converter 41.

The generator 47 is formed with a generator inlet 72 for introducing the circulating refrigerant ( electrical-equipment-circulating-refrigerant) cooled by each electrical-equipment-radiator 90 into the generator cooling system 71, and a generator outlet 73 for discharging the circulating refrigerant that has taken away heat from the heat generating portion. The converter 41 is formed with a converter inlet 82 for introducing the circulating refrigerant cooled by each electrical-equipment-radiator 90 into the converter cooling system 81, and a converter outlet 83 for discharging the circulating refrigerant that has taken away heat from the heat generating portion. The electrical-equipment-radiator 90 is formed with a radiator inlet 91 for introducing the circulating refrigerant that has taken away heat from the generator 47 and the converter 41, and a radiator outlet 92 for discharging the circulating refrigerant cooled by the electrical-equipment-radiator 90. The electrical-equipment-cooling-system 70 includes a converter inlet pipe 74 that connects the radiator outlet 92 and the converter inlet 82, a generator inlet pipe 75 that connects the converter outlet 83 and the generator inlet 72, and an electric outlet pipe 76 that connects the generator outlet 73 and the radiator inlet 91. That is, in the present embodiment, in the electrical-equipment-cooling-system 70, the converter 41 and the generator 47 are connected in series.

The electrical-equipment-radiator 90, the generator 47, the converter 41, and the pipes 74 to 76 constitute an electric circulation path 77 through which the electrical-equipment-circulating-refrigerant circulates. In addition, the electrical-equipment-cooling-system 70 is provided with a pump 78 for circulating the refrigerant in the electric circulation path 77. In the present embodiment, the pump 78 may be driven using the rotational force of the engine 32 or electric power due to a generator provided in the engine, and may be electrically driven using electricity of a battery or an aggregated electric circuit 44 described below. When the rotational force of the engine 32 or the electric power due to the generator provided in the engine is to be used, the power of the engine 32 to be cooled is used.

In the present embodiment, the electrical-equipment-radiator 90 is positioned in the rotor-side region 1a, and is provided at a position sufficiently away from the fuselage region 1a where the generator 47 and the converter 41 are provided. In the present embodiment, the electrical-equipment-cooling-system 70 cools the converter 41 and the generator 47 which are electrical equipments for supplying power, but may cool the inverter 42 and the motor 48 which are other electrical equipments for supplying power. In addition, another cooling apparatus for cooling the inverter 42 and the motor 48 may be provided.

As described above, since each of the radiators 60 and 90 is positioned in the rotor-side region 1a, it is easy to prevent the influence of the heat radiated from the engine 32, the generator 47, and the converter 41 positioned in the fuselage region 1a on each of the radiators 60 and 90 and to promote the heat exchange in each of the radiators 60 and 90. In addition, each of the pipes 54, 55, and 74 to 76 may be routed in the internal space of the rotor support frame 12, and in this case, each of the pipes 54, 55, and 74 to 76 can be protected by the rotor support frame 12.

As shown in Fig. 1, in the present embodiment, each of the radiators 60 and 90 is arranged at a position line-symmetric in the airframe width direction DW, for example. A through groove extending in the vertical direction is formed in each of the radiators 60 and 90. The downward airflow generated by the rotation of each rotor 20 passes through the through groove to promote heat exchange in each of the radiators 60 and 90. The respective engine-radiators 60a to 60c are disposed below the rotors 20 correspondingly to the rotors 20d, 20g, and 20h, and the respective electrical-equipment-radiators 90a to 90c are disposed below the rotors 20 correspondingly to the rotors 20b, 20f, and 20c. Each of the radiators 60 and 90 is supported by the rotor support frame 12.

Specifically, as shown in Fig. 1, each of the radiators 60 and 90 is fixed to both the rotor support member 12a and the lateral frame 12b, for example. Specifically, one side of each of the radiators 60 and 90 formed in a substantially rectangular shape is fixed to the rotor support member 12a. In addition, the other side of each of the radiators 60 and 90 is supported by the lateral frame 12b. By supporting each of the radiators 60 and 90 on the two sides in this manner, the support rigidity of each of the radiators 60 and 90 can be easily increased. It should be noted that each of the radiators 60 and 90 may be fixed only to any one of the rotor support member 12a and the lateral frame 12b.

Each of the radiators 60 and 90 is disposed at a position shifted from the motor 48 of each rotor unit 2 in a plan view, that is, at a position not overlapping with the motor 48. Each of the radiators 60 and 90 is disposed in a region where the airflow guided by the rotor 20 flows. For example, each of the radiators 60 and 90 is disposed at a position overlapping with the rotation region of the rotor blade of the rotor 20 in a plan view. In the present embodiment, each of the radiators 60 and 90 is disposed at a position below the rotor blades of the rotor 20. In addition, the periphery of each of the radiators 60 and 90 in the horizontal direction may be covered with a rotor cover 23 from the side. In other words, each of the radiators 60 and 90 may be arranged in a region protected from the proximity of surrounding objects by the rotor cover 23. Radiators 60 and 90 may be dispersedly arranged inside the rotor cover 23.

For example, each of the radiators 60 and 90 may be provided between rotor shafts of a pair of rotors 20 disposed inside one rotor cover 23. In other words, each of the radiators 60 and 90 may be provided at a position through which a pair of airflows generated by the rotation of the pair of rotors 20 passes. Accordingly, even in a state where one rotor 20 of the pair of rotors 20 is stopped, when the other rotor 20 rotates, it is easy to maintain the cooling of the radiators 60 and 90 with the airflow generated by the other rotor 20.

The electrical-equipment-cooling-system 70 is configured to cool the electrical equipment 40 having a smaller heat generation value than the internal combustion engine unit 30. Here, the internal-combustion-engine-cooling-system 50 and the electrical-equipment-cooling-system 70 are configured as separate circuits independent of each other. Accordingly, a cooling temperature suitable for each of the internal-combustion-engine-cooling-systems 50 and the electrical-equipment-cooling-systems 70 is achieved. Specifically, the electric component cooling temperature is lower than the internal combustion engine cooling temperature.

The electrical-equipment-circulating-refrigerant and the internal-combustion-engine-circulating-refrigerant can independently cool a member to be cooled by adjusting cooling performance of each electrical-equipment-cooling-system 70 and each internal-combustion-engine-cooling-system 50. For example, the members to be cooled can be cooled independently by setting the flow rate of the circulating refrigerant, the size (heat dissipation performance) of each of the radiators 60 and 90, and/or the valve opening temperature of a thermostat (not shown) provided in each of the electrical-equipment-cooling-systems 70 and the internal-combustion-engine-cooling-systems 50.

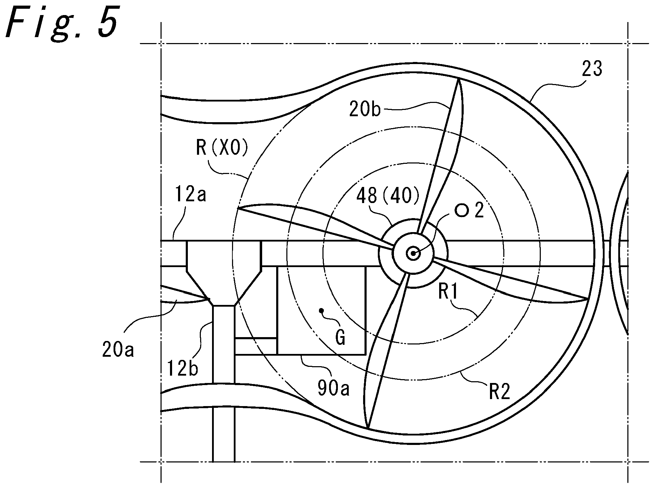

Next, an arrangement of one electrical-equipment-radiator 90a will be described as an example with reference to Fig. 5. The remaining radiators 60 and 90 are also arranged in the same manner, and the description thereof will be omitted. As described above, the electrical-equipment-radiator 90a is disposed below the corresponding rotor 20b, and is positioned in the region through which the airflow generated by the rotation of the rotor 20b passes.

Specifically, when viewed from a direction parallel to the rotation axis O2 of the rotor 20b, at least a part of the electrical-equipment-radiator 90a overlaps the rotor rotation range X0 defined by the rotating rotor 20b.

Preferably, the entire electrical-equipment-radiator 90a is positioned within the rotor rotation range X0. More preferably, the electrical-equipment-radiator 90a is positioned close to the outer diameter side of the rotor rotation range X0. Specifically, in the rotor rotation range X0, the centroid G of the electrical-equipment-radiator 90a is positioned on the outer diameter side of the position R1 of 50% of the radius R of the rotor 20b in the radial direction, and is positioned at the position R2 of 75% of the outer diameter side of the radius R or on the inner diameter side thereof.

In addition, the electrical-equipment-radiator 90a is provided so that a projected area of a portion obtained by projecting the electrical-equipment-radiator 90a in a direction parallel to the rotation axis O2 with respect to the rotor rotation range X0 is 10% or less of the projected area of the rotor rotation range X0.

In addition, as shown in Fig. 2, the electrical-equipment-radiator 90a is provided at a height separated downward by a length of 30% to 60% of the radius R of the rotor 20b with respect to the lower end of the rotating rotor 20.

As shown in Fig. 1, the engine 32 constituting a part of each power generation unit 3 is disposed in a rear region in the airframe front-rear direction DL in the fuselage apparatus loading space S1. In the present embodiment, the region where the engine 32 is disposed is an upper region of the luggage room S2. Similarly to the engine 32, each generator 47 is arranged in a rear region in the airframe front-rear direction DL in the fuselage apparatus loading space S1. In addition, each generator 47 is disposed on the front side in the airframe front-rear direction DL with respect to the engine 32 from which the power is transmitted.

The respective engines 32 are arranged side by side in the airframe width direction DW. Adjacent engines 32 of the respective engines 32 are disposed at positions shifted from each other in the airframe front-rear direction DL. Specifically, the engine 32 at the central portion in the airframe width direction DW is disposed in the airframe-front with respect to the other engines 32 disposed outside in the airframe width direction DW. With this arrangement, it is possible to form a large gap around the adjacent engines 32 as compared with a case where the respective engines 32 are aligned and arranged in the airframe width direction DW. Accordingly, the movement of the surrounding air warmed by the combustion of the fuel of the engine 32 can be easily promoted. This make it possible to suppress the temperature rise of the air in the body housing 11a. In addition, by forming a large gap around the engine 32, maintainability of the engine 32 can be improved. For example, the rear end surface of the engine 32 at the central portion in the airframe width direction DW may be positioned in front of the front end surface of the adjacent engine 32. As a result, it is easy to access the engine 32b at the center in the airframe width direction DW from the airframe side, and it is possible to further prevent deterioration in maintainability of the engine 32.

In the present embodiment, each engine 32 is disposed so that the output axis a extends in the airframe width direction DW. As described above, since the adjacent engines 32 are arranged to be shifted in the airframe front-rear direction DL, the engines 32 can be also arranged to overlap each other in the airframe width direction DW, and it is possible to prevent an increase in size of the multicopter 1 in the airframe width direction DW. It should be noted that the arrangement of the output axis a may be arranged to extend in the airframe front-rear direction DL, for example.

On the front side in the airframe front-rear direction DL of each of the engines 32, a corresponding one of the generators 47 is disposed. Each of the generators 47 is connected to a corresponding one of the engines 32 through a chain which is a power transmission mechanism. In the present embodiment, a transmission is connected to an output shaft of the engine 32, and a revolving speed suitable for power generation of the generator 47 is achieved by deceleration by the transmission and the power transmission mechanism (sprocket). Similarly to the engines 32, the respective generators 47 are arranged side by side in the airframe width direction DW, and the adjacent generators 47 are arranged at positions shifted in the airframe front-rear direction DL. Since the engine 32 and the generator 47 corresponding to the engine 32 are configured to be aligned in the airframe front-rear direction DL, the generator 47 and the engine 32 may be directly connected to each other.

Each engine 32 is connected with an exhaust pipe 33 for discharging exhaust generated by combustion into the atmosphere. The exhaust pipe 33 is connected to an exhaust port of each engine 32, and discharges exhaust rearward in the airframe front-rear direction DL of the engine 32. Specifically, the exhaust pipe 33 extends rearward in the traveling direction from the exhaust port of the engine 32. In the present embodiment, since the exhaust port of the engine 32 directs rearward in the airframe front-rear direction DL with respect to the engine main body, the exhaust pipe 33 can be easily disposed behind the engine 32. In addition, since the outlet portion of the exhaust pipe 33 is formed so as to protrude to the outside of the body housing 11a, it is possible to prevent the exhaust of the engine 32 from flowing into the body housing 11a. It should be noted that the exhaust pipe 33 preferably includes a muffler portion serving as a silencer, and the muffler portion is preferably disposed outside the body housing 11a. Accordingly, a temperature rise in the body housing 11a can be further prevented. In addition, it is preferable that the intake port of the engine 32 directs airframe-forward with respect to the engine main body. Accordingly, interference between the intake tube that guides intake air to the engine 32 and the exhaust pipe 33 can be prevented. In addition, an air cleaner for filtering intake air guided to the engine 32 and an intake pipe are preferably disposed in airframe-front with respect to the engine 32. As a result, it is possible to guide intake air having a low temperature to the engine 32 while suppressing the influence of exhaust air.

A fuel tank (not shown) serving as a fuel supply source to each engine 32 is disposed in front of each generator 47. Since each fuel tank is disposed in front of the engine, it is possible to make the fuel tank less susceptible to heat from the engine 32 and the exhaust pipe 33. Each fuel tank is connected to the engine 32 through a fuel tube (not shown). It should be noted that although each fuel tank is provided for a corresponding engine 32 in the present embodiment, one fuel tank may be provided in common for each engine 32.

The converter 41 constituting a part of the power generation unit 3 is disposed adjacent to the corresponding generator 47. Each converter 41 is disposed on the front side in the airframe front-rear direction DL in the fuselage region 1a, more specifically, in front in the airframe front-rear direction DL with respect to each generator 47. Accordingly, the electrical wiring harness that electrically connects the generator 47 and the converter 41 can be shortened. Similarly to the engines 32, the respective converters 41 are arranged side by side in the airframe width direction DW.

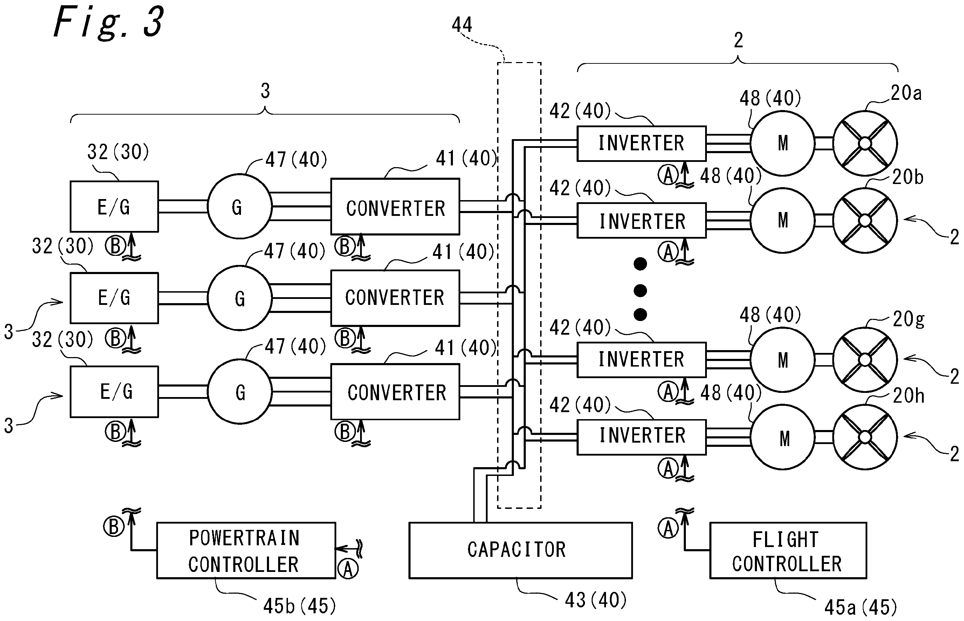

In the present embodiment, the power generated by the power generation unit 3 is supplied to the rotor unit 2 through the aggregated electric circuit 44 (Fig. 3). Specifically, as shown in Fig. 3, the respective converters 41 constituting some of the respective power generation units 3 are connected in parallel to the aggregated electric circuit 44. Accordingly, in the aggregated electric circuit 44, the power generated by each power generation unit 3 is aggregated. In addition, the respective inverters 42 constituting some of the respective rotor units 2 are connected in parallel to the aggregated electric circuit 44. Accordingly, the aggregated electric circuit 44 is configured to be able to supply the aggregated electric power to the respective rotor units 2. The capacitor 43 which is a power storage apparatus is electrically connected in series with the aggregated electric circuit 44 and electrically connected in parallel with the power generation unit 3. That is, the generator 31 and the capacitor 43 are connected in parallel to the aggregated electric circuit 44 that supplies power to the motors 22. Accordingly, the capacitor 43 is configured to be able to transfer power to and from the aggregated electric circuit 44, and can suppress the fluctuation in the output power supplied to the inverter 42 due to the output fluctuation of the engine. In addition, without depending on the control of the powerplant control computer 45b described below, the capacitor 43 discharges so as to prevent a voltage decrease when the voltage of the aggregated electric circuit 44 decreases, and charges power so as to prevent a voltage increase when the voltage increases. Accordingly, it is possible to respond to the instantaneous required power associated with the attitude control and the like more quickly than the adjustment of the power generation amount by the powerplant control computer 45b without requiring special control. It should be noted that the revolving speed of the generator 47 is maintained constant, and thus the voltage to be generated is controlled to be constant. By chaning a throttle opening so as to change the torque serving as the load (that is, changing the current to the generator 31), the power fluctuation desrived above is adjusted. That is, when the capacitor 43 is discharged to decrease the voltage and decrease the revolution speed, the throttle is opened to increase the power generation amount in order to compensate for the decrease. In addition, the power generation fluctuation caused by the engine pulsation can also be suppressed by using the capacitor 43.

The capacitor 43 is also referred to as a condenser, and has a structure in which charge is stored by a voltage being applied between conductors. In the present embodiment, the capacitor 43 is disposed at a position close to the aggregated electric circuit 44 and the inverter 42. Specifically, the capacitor 43, the aggregated electric circuit 44, and the inverter 42 are arranged adjacent to each other in the vertical direction. Accordingly, the electronic apparatus system can be compactly arranged, and the power in the capacitor 43 can be promptly supplied to each inverter 42.

As described above, the controller 45 includes a flight control computer 45a that controls the flight and the attitude of the multicopter 1 and a powerplant control computer 45b that controls the power supply to the motor 22. It should be noted that the flight control computer 45a and the powerplant control computer 45b are configured separately in the present embodiment, but may have an integrated structure.

The flight control computer 45a reads a flight control program stored in the storage unit, and calculates the motor speed of an individual motor 48 required so as to perform a flight and an attitude predetermined by a flight calculation unit on the basis of a position information and a gyro information obtained by a GPS and a gyro sensor (not shown). The flight control computer 45a controls an individual inverter 42 according to the calculation result.

The powerplant control computer 45b reads a control program stored in the storage unit, and acquires information detected by various sensors provided in the power generation unit 3 and the like. The powerplant control computer 45b controls at least one of the engine 32 and the generator 47 to control the generated power in accordance with a control command from the flight control computer 45a. Specifically, the powerplant control computer 45b includes a calculation unit that controls the engine 32 and the converter 41 so that the power supply amount to the motor 48 becomes appropriate. For example, the powerplant control computer 45b controls on the engine 32 to have a constant engine speed. In addition, the powerplant control computer 45b gives a torque command of the generator 47 to the converter 41. In addition, the powerplant control computer 45b controls the power generation unit 3 (at least one of the engine 32 and the generator 47) so that the voltage of the aggregated electric circuit 44 is to be a predetermined value. For example, the powerplant control computer 45b controls to increase the power generation amount when the voltage of the aggregated electric circuit 44 is lower than the predetermined value, and controls to decrease the power generation amount when the voltage of the aggregated electric circuit 44 is higher than the predetermined value.

The respective converters 41, the respective inverters 42, the flight control computer 45a, and the powerplant control computer 45b are disposed on the front side of the airframe in the fuselage region 1a, more specifically, in front in the airframe front-rear direction DL with respect to the respective generators 47. The capacitor 43 is housed in the auxiliary room housing 15. The electrical equipments include power electrical equipments for driving a rotor 20 (a generator 47, a converter 41, an inverter 42, a motor 48, and a capacitor 43) and light electronic components (control system electrical equipments including a sensor and a flight control computer for flight control). The engine 32 is disposed behind the electrical equipments.

As described above, in the present embodiment, the multicopter 1 includes a capacitor 43. For example, when the sum of the power supplied to the rotor 20 is temporarily larger than the sum of the power generated by the respective power generation units 3, the multicopter 1 supplies power from the capacitor 43 to the rotor unit 2. In addition, when the sum of the power generated by the respective power generation units 3 is temporarily larger than the sum of the power supplied to the rotor unit 2, the multicopter 1 recharges the capacitor 43.

In the multicopter 1 of the present embodiment, three power generation units 3 are connected in parallel to the aggregated electric circuit 44. In addition, eight rotor units 2 are connected in parallel to the aggregated electric circuit 44.

In each power generation unit 3, a corresponding engine 32 is mechanically connected in a power transmittable manner to a corresponding generator 47. The power generation units 3 cause the respective engines 32 to drive the generators 47 to generate AC power. The pieces of AC power generated by the respective generators 47 are converted into pieces of DC power through the corresponding converters 41. The pieces of power converted into the DC by the respective converters 41 are aggregated by the aggregated electric circuit 44 and then supplied to the respective inverters 42.

The pieces of DC power supplied to the respective inverters 42 are converted into pieces of three-phase AC power and the pieces of three-phase AC power are supplied to the corresponding motors 48. In the present embodiment, an electrical component that adjusts the power supplied from each generator 47 to each motor 48 in this manner is referred to as a power adjustment circuit. Specifically, the power adjustment circuit refers to each converter 41, the aggregated electric circuit 44, and each inverter 42.

As described above, each motor 48 is mechanically connected in a power transmittable manner to a corresponding one rotor 20. When the respective motors 48 receive electric power and are driven, the corresponding rotors 20a to 20h are driven.

In addition, the capacitor 43 is electrically connected to the aggregated electric circuit 44, and the capacitor 43 first responds to power requests from the motors 48. When the voltage of the aggregated electric circuit 44 decreases due to the power supply to the rotor units 2, the power generation units 3 are controlled to increase the power generation amount and keep the voltage constant at the target value. In contrast, when surplus power is generated, since the voltage of the aggregated electric circuit 44 increases, the power generation units 3 are controlled to reduce the power generation amount and keep the voltage constant at the target value. As described above, without depending on the control of the powerplant control computer 45b, the capacitor 43 discharges so as to prevent a voltage decrease when the voltage of the aggregated electric circuit 44 decreases, and charges power so as to prevent a voltage increase when the voltage increases. Accordingly, it is possible to respond to the instantaneous required power fluctuation associated with the attitude control and the like more quickly than the adjustment of the power generation amount by the powerplant control computer 45b without requiring special control.

In the present embodiment, in order to control the above-described electrical configuration, the controller 45 including the flight control computer 45a and the powerplant control computer 45b is provided.

The powerplant control computer 45b controls each engine 32 and each converter 41 so that the voltage of the aggregated electric circuit 44 is maintained at a predetermined value. For example, the powerplant control computer 45b operates the torque commands of the converters 41 so as to maintain the engine speeds of the respective engines 32 within a certain range and to maintain the voltage of the aggregated electric circuit 44 at a constant value. This enables stable flight of the multicopter 1, and suppresses overcharge and overdischarge of the capacitor 43 as well. In addition, by controlling the powerplant control computer 45b so that when the voltage of the aggregated electric circuit 44 is lower than the voltage of the capacitor 43, discharge from the capacitor 43 is executed, and when the voltage of the aggregated electric circuit 44 is higher than the voltage of the capacitor 43, charging of the capacitor 43 is executed, the power supply after being compensated by the capacitor 43 can be borne by the generator 47.

The flight control computer 45a controls the rotor speed of each rotor 20 for flight control of the multicopter 1. Specifically, the flight control computer 45a individually controls the respective inverters 42 in order to control the rotor speeds of the rotors 20a to 20h. Accordingly, the multicopter 1 can perform a flight operation required with a stable attitude.

Specifically, in order to perform the requested flight operation, the flight control computer 45a calculates the rotor speed required for each rotor 20 according to the requested flight operation, and outputs the rotor speed command to the inverter 42. On the other hand, the powerplant control computer 45b outputs an accelerator opening command necessary for keeping the engine speed of the engine 32 constant to the engine 32, and outputs a torque command to the converter 41 to control the power generation amount.

In the adjustment of the power generation amount as described above, since the time from when the flight control computer 45a issues the rotor speed command to when each power generation unit 3 completes the response is dominated by the response speed of the engine 32, the response speed is slow. Therefore, when the capacitor 43 is not provided, the output response due to the power generation is not in time under the attitude control in which a response for a significantly short time, such as to maintain the attitude in a disturbance such as wind, is required, and the control may be lost.

The multicopter 1 of the present embodiment is provided with the capacitor 43 as described above. The capacitor 43 can instantaneously charge and discharge a large current. To that end, the capacitor 43 first responds supplementarily to the instantaneous power demand for attitude control, and compensates for the delay of the output response of the engine 32. For example, when an instantaneous increase in the output of the motor 48 is required due to a disturbance state such as a gust of wind, the capacitor 43 immediately starts supplying power to the aggregated electric circuit 44 to compensate for the response delay of each power generation unit 3.

The capacitor 43 has capacitance necessary for suppressing the fluctuation of the required power due to the short-time response of the motors 48. That is, the capacitor 43 is provided so as to have capacitance capable of compensating for the power necessary for the attitude control of the airframe from when the engine 32 receives the output change command to when the output is changed. Accordingly, the power shortage caused by the output change by the engine 32 can be compensated by the capacitor 43. Specifically, the capacitance of the capacitor 43 may be 100 Wh or more and 1000 Wh or less in terms of power amount. This minimum capacitance corresponds to a case where the voltage fluctuation allowable range of the converter 41 is maximally used, and flight is enabled with standard load fluctuation (standard flight conditions). This maximum capacitance corresponds to a case where the flight can withstand even with larger load fluctuation (strict flight conditions) while having an appropriate margin for the voltage fluctuation allowable range of the converter 41. It should be noted that the capacitance range of the capacitor 43 is not limited to the above-described range, and can be appropriately changed according to the airframe weight, the inertia moment of the airframe, the flight conditions, the margin, and the like.

According to the above configuration, the engine 32 having a power density (kW/kg) several times higher than that of a lithium ion battery is used as a main power source, and the capacitor 43 capable of instantaneously discharging a large current as compared with a battery is used as an auxiliary power storage apparatus, so that the entire power unit can be reduced in size and weight. Here, the power unit refers to a power generation apparatus (the engine 32 and the generator 47) and a power storage apparatus (the capacitor 43). In addition, in the attitude control of the airframe, even when a power demand difference is instantaneously generated due to a response delay of the internal combustion engine, excess or deficiency fluctuation of the supply power to the motors 48 can be absorbed by the capacitor 43. Furthermore, the capacitor 43 only needs to have sufficient capacitance to compensate for the response delay of the engine 32, and an increase in size of the power storage apparatus can also be prevented. In this manner, the multicopter 1 that can withstand long-time flight while preventing an increase in size and weight of the power unit is achieved.

In the above configuration, the multicopter 1 may be, for example, a large one having a total length of 5 m or more and a loadable amount of 100 kg or more. In addition, all of the rotors 20a to 20h have the same size, and have a diameter of, for example, 1.3 m or more.

The multicopter 1 according to the above embodiment has the following effects.
(1) The electrical-equipment-circulating-refrigerant takes away heat from the heat generating portion of the electrical equipment 40. The electrical-equipment-circulating-refrigerant that has taken away heat is sent to the electrical-equipment-radiator 90 by the pump 78. The electrical-equipment-circulating-refrigerant is cooled by heat exchange with the atmosphere in the electrical-equipment-radiator 90. As described above, the electrical-equipment-circulating-refrigerant is circulated between the electrical-equipment-radiator 90 and the heat generating portion of the electrical equipment 40, whereby the temperature rise of the electrical equipment 40 is prevented. By cooling the electrical equipment 40 using the electrical-equipment-circulating-refrigerant in this manner, the inner portion of the outer surface of the multicopter 1 can also be cooled. By using the electrical-equipment-circulating-refrigerant flowing at a position close to the heat generating portion as described above, the cooling effect can be improved as compared with the case where the electrical equipment 40 is cooled by blowing the airflow on the electrical equipment 40.
   For example, cooling of the heat generating portion can be promoted by supplying the electrical-equipment-circulating-refrigerant to a portion close to the heat generating portion among the electrical equipments 40. In addition, the electrical-equipment-radiator 90 can be separated from the power generating portion among the electrical equipments 40, and cooling of the electrical-equipment-circulating-refrigerant can be promoted.
(2) Heat exchange with the outside air in each of the radiators 60 and 90 is performed by the airflow generated by the rotating rotor 20, and it is not necessary to provide a new fan to dissipate heat from each of the radiators 60 and 90. As a result, the number of parts can be reduced, the weight of the multicopter 1 can be reduced, and the space for disposing a new fan can be reduced as compared with a case where a new fan is provided. In addition, it is not necessary to newly install a cooling apparatus for cooling the fan itself associated with when a newly fan is installed, to newly install an intake and exhaust structure for the fan, and to newly install a power drive apparatus for electrically driving the fan or a power transmission mechanism for mechanically driving the fan. It should be noted that when a fan is mechanically driven by an engine using a power transmission mechanism such as a chain and a pulley, a structure becomes complicated and an energy loss is large.
(3) Since each of the radiators 60 and 90 is disposed below the rotor 20, the radiators 60 and 90 are prevented from coming into contact with the rotor 20 when the radiators 60 and 90 fall off.
(4) In the multicopter 1, each of the radiators 60 and 90 is dispersedly arranged below the rotors 20b to 20d and the rotors 20f to 20h. By dispersedly arranging each of the radiators 60 and 90, it is possible to reduce the size of the radiators 60 and 90 occupying per one rotor 20. Accordingly, it is easy to suppress the interference with the airflow generated from the rotor 20 caused by the provision of the radiators 60 and 90, and it is easy to prevent the influence with respect to the thrust due to the rotor 20.
(5) Each of the radiators 60 and 90 is arranged line-symmetrically with respect to a center line passing through the airframe width direction DW and extending in the front-rear direction. Accordingly, it is easy to balance the thrust in the airframe width direction DW by the rotor 20 of the multicopter 1.
(6) Since the engine-radiator 60 is positioned in the region through which the airflow generated by the rotation of the rotor 20 passes, it is easy to suppress the temperature rise of the internal combustion engine having a large heat generation value.
(7) By including the internal-combustion-engine-cooling-systems 50, even when one internal-combustion-engine-cooling-system 50 fails, another internal-combustion-engine-cooling-system 50 can maintain the cooling of another engine 32 corresponding to the other internal-combustion-engine-cooling-system 50, and the operation of the other engine 32 can be continued. Accordingly, it is possible to suppress the influence due to the stop of the engine 32 according to the failure of the internal-combustion-engine-cooling-system 50.
(8) By including the electrical-equipment-cooling-systems 70, even when one electrical-equipment-cooling-system 70 fails, another electrical-equipment-cooling-system 70 can maintain the cooling of another generator 47 and converter 41 corresponding to the electrical-equipment-cooling-system 70, and the operations of the other generator 47 and converter 41 can be continued. Accordingly, it is possible to suppress the influence due to the stop of the generator 47 and the converter 41 corresponding to the failure of the electrical-equipment-cooling-system 70.
   Moreover, a generator 47 and a converter 41 corresponding thereto are connected to the electrical-equipment-cooling-system 70. Therefore, since each electrical-equipment-cooling-system 70 includes a complete set of electrical equipments, andfurthermore the set includes the generator 47 and the converter 41 corresponding to each other, the generated electric power is easily maintained.
(9) A heat generation value of the internal combustion engine unit 30 at the time of driving is greatly different from a heat generation value of the electrical equipment 40 at the time of driving. By independently cooling the electrical equipment 40 and the internal combustion engine unit 30 having greatly different heat generation values as described above, it is easy to provide different cooling capacity to each of the internal combustion engine unit 30 and the electrical equipment 40. In addition, the structures themselves of the electrical-equipment-cooling-system 70 and the internal-combustion-engine-cooling-system 50 can be made different to each other so as to make the flow path diameter, the flow velocity, the heat exchange performance, and the like different, whereby the internal combustion engine unit 30 and the electrical equipment 40 can be independently cooled in respective required temperature ranges.
   Moreover, a generator 47 and a converter 41 corresponding thereto are connected to the electrical-equipment-cooling-system 70. Therefore, since each electrical-equipment-cooling-system 70 includes a complete set of electrical equipments, and furthermore the set includes the generator 47 and the converter 41 corresponding to each other, the generated electric power is easily maintained.
(10) Among the electrical-equipment-radiator 90a to 90c dispersedly arranged in the multicopter 1, the electrical-equipment-radiator 90a and 90b positioned on the front side of the airframe are used in the electrical-equipment-cooling-system 70, so that it is easy to shorten the cooling pipe connected to the electrical equipment 40 positioned on the front side of the airframe. In addition, since the electrical-equipment-radiator 90c is positioned on the front side of the airframe with respect to the engine-radiators 60a and 60c, the cooling pipe can be easily configured to be short as compared with the case where these are connected to the electrical equipment 40.
   Similarly, among the engine-radiators 60a to 60c, the engine-radiators 60a and 60c positioned on the rear side of the airframe are used in the internal-combustion-engine-cooling-system 50, so that it is easy to shorten the cooling pipe connected to the internal combustion engine unit 30 positioned on the rear side of the airframe. In addition, since the engine-radiator 60b is positioned on the rear side of the airframe with respect to the electrical-equipment-radiators 90a and 90b, the cooling pipe can be easily configured to be short as compared with the case where these are connected to the internal combustion engine unit 30.
(11) Each of the radiators 60 and 90 is disposed on the outer diameter side of the rotor rotation range X0 below the corresponding rotor 20. Since the rotor wind due to the rotation of the rotor 20 is relatively strong in the outer diameter side portion of the rotor rotation range X0, it is easy to more effectively cool the radiators 60 and 90. It should be noted that the centroid G of the radiators 60 and 90 is positioned at 50 to 75% of the radius R.
(12) Since the projected area of each of the radiators 60 and 90 is set to 10% or less of the projected area of the rotor rotation range X0 in the rotation axis direction of the rotor 20, excessive interference of the radiators 60 and 90 with respect to the rotor wind is suppressed. Therefore, since the influence on the rotor wind is suppressed while the radiators 60 and 90 are disposed below the rotor 20, it is easy to secure the thrust due to the rotor 20.
(13) Each of the radiators 60 and 90 is provided at a height separated downwardly by a length of 30% to 60% of the radius R of the rotor 20 with respect to the lower end of the rotor 20. Accordingly, the airflow generated by the rotation of the rotor 20 can be supplied to each of the radiators 60 and 90 in a state where the wind speed of the airflow is sufficiently increased. When each of the radiators 60 and 90 is positioned at a height separated by a distance of less than 30% of the radius R with respect to the rotor 20, the wind velocity of the airflow generated by the rotation of the rotor 20 does not sufficiently increase. On the other hand, when each of the radiators 60 and 90 is positioned at a height separated by a distance of more than 60% of the radius R with respect to the rotor 20, the airflow generated by the rotation of the rotor 20 is weakened. Therefore, it is difficult for any one of the cases to suitably exhibit the cooling performance by the airflow.

In the present embodiment, each inverter 42 is disposed in the front in the airframe front-rear direction DL in the fuselage region 1a. Specifically, each inverter 42 is disposed in front of the generator 47 and the converter 41 in the airframe front-rear direction DL. Accordingly, during cruise operation of the multicopter 1, the flight wind comes into contact with the inverter 42 before coming into contact with other heat generating components, and the inverter 42 can be cooled by the flight wind. It is preferable that an introduction path for guiding the flight wind to the inverter 42 is formed in the multicopter 1. The introduction path is preferably formed with an inlet that opens forward in the airframe front-rear direction DL from the fuselage region 1a in front of each inverter 42, and formed with an outlet that opens to the outside from the fuselage region 1a behind each inverter 42 in the airframe front-rear direction DL. As described above, the temperature rise in the inverter 42 can be prevented by forming the introduction port and arranging the inverter 42.

Since each of the radiators 60 and 90 is disposed adjacent to the lateral frame 12b, the cooling pipe can be easily disposed along the lateral frame 12b. The lateral frame 12b supports the cooling pipe in the rotor-side region 1b, and thus the support structure can be simplified. In addition, since the engine-radiators 60b and 60c are disposed adjacent to each other across the lateral frame 12b, it is easy to commonize the routing of each of the pipes 54 and 55 corresponding to these. On the other hand, since the engine-radiator 60a is disposed inside the rotor cover 23 different from the rotor cover 23 in which the engine-radiators 60b and 60c are disposed, even in a state where the rotors 20g and 20h corresponding to the engine-radiators 60b and 60c are stopped, heat exchange in the engine-radiator 60a is maintained when the rotor 20d corresponding to the engine-radiator 60a rotates.

The rotor 20, the rotor cover 23, the rotor support frame 12, and each of the radiators 60 and 90 may be configured to be detachable. In this case, furthermore, the cooling pipe may be configured to be detachable in a region between the fuselage region 1a and the rotor-side region 1b. In addition, an on-off valve for preventing outflow of the circulating refrigerant may be formed on both side portions of the detachable portion in the cooling pipe. It should be noted that when each of the radiators 60 and 90 is removed, since the cooling pipe is attached and detached in a state where the on-off valves formed on both sides of the detachable portion are closed, the fuselage region 1a and the rotor-side region 1b can be separated with the refrigerant being prevented from leaking, the housing property can be improved, and the circulating refrigerant can be prevented from leaking. Accordingly, the multicopter 1 can be easily made compact, and the transportability is improved.

The engine-radiator 60 and the electrical-equipment-radiator 90 are formed with the same components, and thus the number of components can be reduced. In addition, the engine-radiator 60 and the electrical-equipment-radiator 90 may be formed in different shapes. Accordingly, it is easy to set the cooling capacity suitable for the object to be cooled, it is possible to prevent excessive capacity, and for example, it is possible to achieve size reduction and weight reduction. In addition, in the above embodiment, each of the radiators 60 and 90 is arranged symmetrically with respect to the airframe width direction DW, but may be arranged point-symmetrically about the center of gravity of the airframe. This also makes it easy to maintain the balance of the airframe. In addition, each of the radiators 60 and 90 does not need to be arranged line-symmetrically or point-symmetrically with respect to the airframe, and may be arranged asymmetrically with respect to the airframe width direction DW, for example.

In the above embodiment, the hybrid series type multicopter has been described as an example, but the present invention is not limited thereto. That is, the present invention can also be applied to a multicopter that drives a motor with electric power from a power storage apparatus as main electric power without including an internal combustion engine and a generator. In this case, the same effect is achieved by providing an electric component cooling system for cooling the electrical equipments.

In the above embodiment, the case where the internal-combustion-engine-cooling-system 50 and the electrical-equipment-cooling-system 70 are configured as individual cooling circuits has been described as an example, but the present invention is not limited thereto. In addition, in the above embodiment, the case where each of the cooling systems 50 and 70 is independent has been described as an example, but the present invention is not limited thereto. For example, the cooling systems 50 and 70 may be configured in parallel from each pump to the three generators 47 or the three engines 32. Accordingly, a redundant system can be configured. At this time, cooling water may be branched through a reservoir.

In addition, in the case of an electrical equipment sufficiently cooled by air cooling, a case where cooling thereof is omitted is also included in the present invention. In addition, the present invention also includes a case where some of cooling circuits such as a pump, a circulation path, and a radiator are partially commonized. For example, as shown in parentheses in Fig. 5, the electrical-equipment-cooling-system 70 may cool the motor 48 and the inverter 42.

With the generators 47 provided in the power generation units 3, and/or, in addition to these, the corresponding converters 41 as one generator group, the electrical-equipment-cooling-system 70 may be provided for each of the generator groups. In addition, in the above embodiment, the case where the electrical-equipment-cooling-system 70 is individually provided for each of the three power generation units 3 has been described as an example, but the present invention is not limited thereto. One electrical-equipment-cooling-system 70 may cool the electrical equipments 40 provided in the three power generation units 3.

In the present embodiment, as the electrical equipments to be cooled, both the generator and the converter are cooled, but the present invention is not limited thereto. For example, cooling any one of them is also included in the present invention. In addition, the inverter or motor may be cooled. As described above, in the present invention, at least one of power electrical equipments such as a generator, a converter, an inverter, a motor, and a capacitor is cooled. In addition, in the present example, the converter and the generator are cooled in this order, but the present invention is not limited thereto. For example, the cooling order may be reversed, or electrical equipments may be cooled in parallel. The refrigerant may be water or a liquid other than water. The lubricating liquid of the generator or the motor and the refrigerant may also be served as each other.

When the abnormality of the cooling unit 5 corresponding to the power generation unit 3 is detected, the driving of the cooling unit 5 in which the abnormality is detected and the power generation unit 3 corresponding thereto may be stopped. In this case, the output of the normal cooling unit 5 and the corresponding power generation unit 3 may be increased. In the abnormal state, it is preferable that the cooling unit 5 is also configured to be controllable to increase the cooling performance such as increasing the flow rate of the circulating refrigerant by the pump according to the increase in the output of the normal power generation unit 3.

The structure of the multicopter is not limited to the example. The number of rotors, the layout, and the like may be different. For example, the heat exchanger may be disposed in an direction in which traveling air passes during cruising. In addition, in the present embodiment, the rotor 20 extends in the horizontal direction in the reference state, but the rotor has only to extend substantially in the horizontal direction, and a case where the rotor 20 is inclined individually is also included in the present invention. In other words, the present invention also includes a case where each of the rotor rotating shafts is inclined from the vertical direction in the reference state. In addition, the rotor 20 may be configured as a counterrotating rotor that offsets the counter torque by arranging two rotors coaxially and rotating the upper stage and the lower stage reversely. In addition, the airframe front-rear direction and the airframe width direction are directions used for describing the airframe, and can be replaced as the first direction and the second direction. In addition, the multicopter 1 may be provided with a fixed wing or a variable wing that can obtain lift during propulsion.

It should be note that the present invention is not limited to the embodiments described above, and various modifications and changes can be made without departing from the spirit and scope of the present invention described in the claims.

### DESCRIPTION OF SYMBOLS

- 1: Multicopter
- 2: Rotor unit
- 3: Power generation unit
- 5: Cooling unit
- 10: Support
- 11: Body frame
- 12: Rotor support frame
- 20: Rotor
- 30: Internal combustion engine unit
- 32: Engine
- 40: electrical equipment
- 41: Converter
- 42: Inverter
- 43: Capacitor
- 44: Aggregated electric circuit
- 45: controller
- 47: Generator
- 48: Motor
- 50: Internal-combustion-engine-cooling-system
- 60: Engine-radiator
- 70: Electrical-equipment-cooling-systems
- 90: Electrical-equipment-radiator
- S1: Apparatus loading space
- G: Centroid of radiator
- X0: Rotor rotation range

## Claims

1. A multicopter comprising:
a support;
rotors supported by the support;
an electrical equipment configured to supply power for rotationally driving the rotors;
a controller configured to control a flight of an airframe by individually adjusting a rotor speed of each of the rotors; and
a cooling unit configured to cool the electrical equipment,
wherein
the cooling unit includes
a heat exchanger,
a refrigerant circulating through the heat exchanger and the electrical equipment, and
a pump configured to circulate the refrigerant.

2. The multicopter according to claim 1, wherein the heat exchanger is positioned in a region through which an airflow generated by rotation of the rotor passes.

3. The multicopter according to claim 2, wherein the heat exchanger is disposed below the rotor.

4. The multicopter according to claim 2 or 3, wherein
the heat exchanger comprises heat exchangers, and
the heat exchangers are dispersedly disposed correspondingly to each of the rotors.

5. The multicopter according to claim 4, wherein the heat exchangers are positioned symmetrically with respect to a position of a center of gravity of the multicopter.

6. The multicopter according to any one of claims 1 to 5, further comprising a rotor cover configured to cover the rotor from an outer peripheral side,
wherein the heat exchanger is positioned inside the rotor cover.

7. The multicopter according to any one of claims 1 to 6, wherein the heat exchanger is positioned in a region through which airflows generated by rotation of the rotors pass.

8. The multicopter according to any one of claims 1 to 7, wherein the electrical equipment includes a generator,
the multicopter further comprising:
an internal combustion engine unit including an internal combustion engine for rotationally driving the generator; and
an internal combustion engine heat exchanger for dissipating heat from a refrigerant circulating in the internal combustion engine unit, and
wherein the internal combustion engine heat exchanger is positioned in a region through which an airflow generated by rotation of the rotor passes.

9. The multicopter according to claim 8, wherein
internal combustion engine units each including the one internal combustion engine are configured,
the cooling unit includes an internal-combustion-engine-cooling-system configured to cool each of the internal combustion engine units, and
the internal-combustion-engine-cooling-system is provided correspondingly to each of the internal combustion engine units.

10. The multicopter according to claim 8 or 9, wherein
generator groups each including one or more of the generators are configured,
the cooling unit includes an electrical-equipment-cooling-system configured to cool the electrical equipment, and
the electrical-equipment-cooling-system is provided correspondingly to each of the generator groups.
